# EUROPÄISCHE PATENTSCHRIFT

(11) **EP 0 841 978 B1**
(45) Veröffentlichungstag und Bekanntmachung des Hinweises auf die Patenterteilung: **22.09.1999**
(21) Anmeldenummer: 96916087.8
(22) Anmeldetag: 15.05.1996
(51) Int. Cl.: B01D 46/24, B01D 46/42, F02M 35/024

(54) **LUFTFILTER**
AIR FILTER
FILTRE A AIR

(30) Priorität: 28.07.1995 DE 29512201 U
(43) Veröffentlichungstag der Anmeldung: 20.05.1998
(73) Patentinhaber: FILTERWERK MANN & HUMMEL GmbH, 71631 Ludwigsburg (DE)
(72) Erfinder: MÜLLER, Heinz, D-71686 Remseck (DE)
(74) Vertreter: Voth, Gerhard, Dipl.-Ing.
(86) Internationale Anmeldenummer: EP9602087
(87) Internationale Veröffentlichungsnummer: WO9704853

(56) Entgegenhaltungen:
- DE-U- 1 807 288
- GB-A- 1 385 587
- GB-A- 2 120 122

## Beschreibung

Die Erfindung betrifft ein Luftfilter nach dem Oberbegriff des Anspruchs 1. Aus dem DE-U 19 60 531 ist ein Luftfilter für Brennkraftmaschinen, Kompressoren und sonstige luftansaugende Maschinen bekannt. Das Filtergehäuse dieses Luftfilters ist an einen Reinluftkanal und gegebenenfalls auch an einen Rohlufteintrittskanal flexibel angeschlossen, wobei das Filtergehäuse zwei im Abstand voneinander fest angeordnete gabelförmige Federklammern trägt. Diese Federklammern können in Gummiteile einrasten, die am Motorgehäuse oder an anderen Fahrzeugteilen angeordnet sind und fixieren damit das Luftfiltergehäuse.

Ein Nachteil dieser Vorrichtung ist darin zu sehen, daß diese Verbindungsmethode keine ausreichende Sicherheit bei Verbrennungsmotoren in Fahrzeugen bietet. Gerade in Landfahrzeugen ist mit größeren Erschütterungen oder Stößen zu rechnen, die evtl. dazu führen können, daß die Federklammern aus den Gummiteilen herausspringen. Dabei würde das Luftfilter nur noch durch die Verbindungsleitungen gehalten.

Es ist weiterhin aus dem DE-U 18 07 288 ein Ansaugluftfilter bekannt, das mit einem Geräuschdämpfer kombiniert ist. Das Filtergehäuse ist mit einer Halterung versehen, die ausschließlich aus elastischen Formteilen besteht. In der Filtergehäusewand sind Aussparungen vorgesehen, ebenso in Halterungsstützen. In diese Aussparungen werden die elastischen Formteile eingeklinkt.

GB-A-1 385 587 (D2) beschreibt ein Verlängerungsstück für einen Rohlufteinlaß eines Filters. Dieses Verlängerungsstück wird teilweise durch ein rückfederndes ("resilient"), kreisausschnitt-förmiges Verbindungselement mit dem Rohlufteinlaß gekoppelt. Am äußeren Umfang des Verbindungselementes sind Einstiche vorgesehen, wobei sich ein Flansch des Verlängerungsstücks in einen der Einstiche erstreckt. Das Verbindungselement dient lediglich als ein Befestigungsstück und entkoppelt nicht die Schwingungen zwischen dem Verlängerungsstück und dem Rohlufteinlaß.

Auch bei dieser Anordnung besteht der Nachteil, daß besonders starke Erschütterungen oder Stöße das Filtergehäuse aus seiner Verankerung herausreißen und Schäden am Motor verursacht werden können.

Der Erfindung liegt die Aufgabe zugrunde, ein Luftfilter zu schaffen, welches elastisch und zuverlässig an einem Befestigungflansch anordenbar und einfach gestaltet ist.

Diese Aufgabe wird ausgehend von dem Oberbegriff des Hauptanspruchs durch dessen kennzeichnende Merkmale gelöst.

Ein wesentlicher Vorteil der Erfindung ist darin Zu sehen, daß das elastische Verbindungselement zwei Funktion gleichzeitig übernimmt. Zum einen entkoppelt es die Schwingungen, die von der Brennkraftmaschine ausgehen, zum anderen dient es der zuverlässigen Befestigung des kompletten Luftfiltergehäuses und der reinluftseitigen Abdichtung. Hierzu ist das elastische Verbindungselement, welches im wesentlichen eine hohlzylindrische Form aufweist, mit umlaufenden Einstichen versehen, wobei wenigstens in einem der Einstiche ein Flansch des Luftfilters hineinragt. Durch die Einstiche läßt sich die Elastizität des Verbindungselements exakt einstellen, so daß das Verbindungselement mit optimalen Dämpfungseigenschaften versehen werden kann.

Gemäß einer Ausgestaltung der Erfindung sind die weiteren umlaufenden Einstiche mit einer größeren radialen Tiefe versehen. Dies dient zur Verbesserung der Entkopplung und bewirkt eine Dämpfung auch bei sehr starken Schwingungsamplituden.

Die Befestigung des Verbindungselements kann gemäß einer Weiterbildung mittels einer Schnappverbindung bewerkstelligt werden. Alternativ hierzu besteht auch die Möglichkeit, das Verbindungselement mit einem Schraubflansch Zu befestigen. Während die Schnappverbindung die Montage besonders vereinfacht, hat die Verbindung mittels Schraubflansch den Vorteil, daß ein Entfernen des Luftfilters nur mit entsprechenden Werkzeugen möglich ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels näher erläutert. Es zeigt
- Figur 1: ein Luftfilter in Schnittdarstellung
- Figur 2: die Gestaltung des elastischen Verbindungselements.

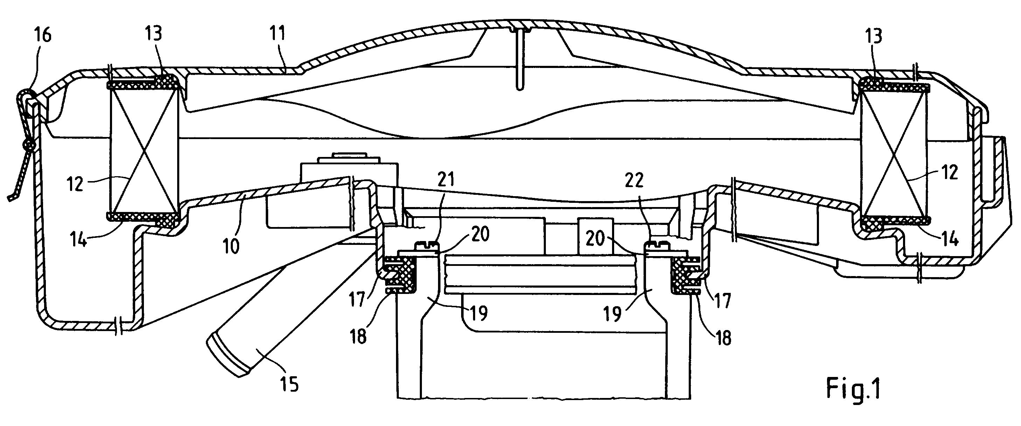

Das Luftfilter gemäß Figur 1 besteht aus einem Gehäuseunterteil 10, einem Deckel 11 sowie einem zwischen Gehäuseunterteil 10 und Deckel 11 eingespannten Luftfiltereinsatz 12. Dieser besteht beispielsweise aus einem zick-zack-förmig gefalteten Filterpapier und weist an seinen Stirnseiten angeschäumte Endscheiben 13, 14 auf. An dem Gehäuseunterteil 10 ist ein Rohlufteinlaß 15 angeordnet. Der Deckel ist an dem Gehäuseunterteil mit Spannverschlüssen 16 befestigt.

Das Gehäuseunterteil 10 weist in seinem Anschlußbereich einen Flansch 17 auf. Dieser Flansch 17 erstreckt sich in die mittlere Nut bzw. den mittleren Einstich eines elastischen Verbindungselements 18. Das elastische Verbindungselement 18 ist an einem Reinluftauslaßstutzen 19 aufgesteckt und wird mit einem Befestigungsflansch 20 gehalten. Der Befestigungsflansch 20 ist mit Schrauben 21, 22 fixiert.

Anstelle der Anordnung eines Befestigungsflansches 20 kann der Reinluflstutzen 19 auch mit Rastelementen versehen sein. Diese Rastelemente sind beispielsweise schuppenförmige Ausgestaltungen des Kontaktbereichs des Verbindungselements 18 mit dem Aufnahmebereich des Reinluftstutzens.

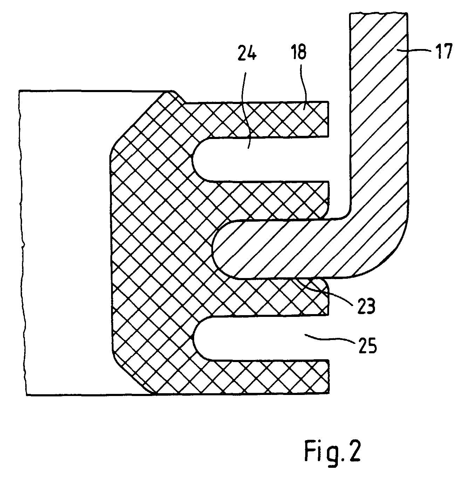

Figur 2 zeigt in einer vergrößerten Darstellung das Verbindungselement. Hier ist der mittlere umlaufende Einstich 23 Zu sehen in welchem der Flansch 17 angeordnet ist. Die beiden äußeren Einstiche 24, 25 weisen eine größere Tiefe auf Dies führt dazu, daß der mittlere Bereich des Verbindungselements bessere elastische Eigenschaften erhält. Durch Variation der Tiefe der Einstiche 24, 25 lassen sich die elastischen Eigenschaften des Verbindungselements verändern. Selbstverständlich besteht auch die Möglichkeit, weitere Einstiche, beispielsweise auch mit geringerer Breite, vorzusehen. Das Verbindungselement ist damit geeignet, Schwingungen, die von der Brennkraftmaschine erzeugt werden, wirkungsvoll abzudämpfen.

## Patentansprüche

1. Luftfilter und Ansaugtrakt für Brennkraftmaschinen mit einem Filtergehäuse (10, 11), einem in dem Filtergehäuse angeordneten Luftfiltereinsatz (12), einem Verbindungselement (18) zum Befestigen des Luftfilters an der Brennkraftmaschine und einer elastischen Verbindung zwischen dem Luftfilter und dem Ansaugtrakt, dadurch gekennzeichnet, daß das Verbindungselement (18) ein elastisches Verbindungselement ist, welches eine im wesentlichen hohlzylindrische Form aufweist und am äußeren Umfang umlaufende Einstiche (23, 24, 25) vorgesehen sind, wobei sich ein Flansch 17 des Luftfilters in einen der umlaufenden Einstiche (23) erstreckt.

2. Luftfilter und Ansaugtrakt nach Anspruch 1, dadurch gekennzeichnet, daß die weiteren umlaufenden Einstiche (24, 25) eine gegenüber dem Einstich (23) für den Flansch (17) größere radiale Tiefe aufweisen.

3. Luftfilter und Ansaugtrakt nach einem der Ansprüche 1 oder 2, dadurch gekennzeichnet, daß das elastische Verbindungselement (18) in einer Aufnahme (19) des Ansaugtrakts eingeschnappt ist.

4. Luftfilter und Ansaugtrakt nach einem der Ansprüche 1 oder 2, dadurch gekennzeichnet, daß das elastische Verbindungselement (18) in eine Aufnahme (19) des Ansaugtraktes eingelegt und mit einem Schraubflansch (20, 21) befestigt ist.

## Claims

1. Air filter and intake duct for internal combustion engines, having a filter housing (10, 11), an air filter element (12) disposed in the filter housing, a connector (18) for securing the air filter to the internal combustion engine, and a resilient connection between the air filter and the intake duct, characterised in that the connector (18) is a resilient connector which has a substantially hollow-cylindrical configuration, and circumferential recesses (23, 24, 25) are provided on the outer circumference, a flange (17) of the air filter extending into one of the circumferential recesses (23).

2. Air filter and intake duct according to claim 1, characterised in that the additional circumferential recesses (24, 25) have a radial depth which is greater than that of the recess (23) for the flange (17).

3. Air filter and intake duct according to one of claims 1 or 2, characterised in that the resilient connector (18) is snapped in position in a receiving means (19) of the intake duct.

4. Air filter and intake duct according to one of claims 1 or 2, characterised in that the resilient connector (18) is inserted in a receiving means (19) of the intake duct and secured by means of a screw flange (20, 21).

## Revendications

1. Filtre à air et conduit d'aspiration pour des moteurs à combustion interne, comprenant un boîtier de filtre (10, 11), une garniture de filtre à air (12) disposée dans le boîtier de filtre, un élément de liaison (18) destiné à assurer la fixation du filtre à air sur le moteur à combustion interne, et un dispositif de liaison élastique prévu entre le filtre à air et le conduit d'aspiration,
caractérisés en ce que
l'élément de liaison (18) est un élément de liaison qui présente une forme sensiblement cylindrique creuse et, sur la périphérie extérieure sont prévues des entailles (23, 24, 25) de pourtour, une bride (17) du filtre à air s'étendant dans l'une des entailles de pourtour (23).

2. Filtre à air et conduit d'aspiration selon la revendication 1,
caractérisés en ce que
les autres entailles de pourtour (24, 25) présentent une profondeur radiale supérieure à celle de l'entaille (23) destinée à la bride (17).

3. Filtre à air et conduit d'aspiration selon l'une des revendications 1 ou 2,
caractérisés en ce que
l'élément de liaison élastique (18) est enclipsé dans un logement (19) appartenant au conduit d'aspiration.

4. Filtre à air et conduit d'aspiration selon l'une des revendications 1 ou 2,
caractérisés en ce que
l'élément de liaison élastique (18) est inséré dans un logement (19) du conduit d'aspiration et est fixé à l'aide d'une bride à visser (20, 21).
